# FASCICULE DE BREVET EUROPEEN

(11) **EP 1 456 081 B1**
(45) Date de publication et mention de la délivrance du brevet: **27.05.2009**
(21) Numéro de dépôt: 02761928.7
(22) Date de dépôt: 09.04.2002
(51) Int. Cl.: B64C 23/06

(54) **EXTREMITE D'AILE CYLINDRIQUE A FENTE HELICOIDALE**
ZYLINDRISCHE FLÜGELSPITZE MIT SCHRAUBENFÖRMIGEM SCHLITZ
CYLINDRICAL WING TIP WITH HELICAL SLOT

(30) Priorité: 11.04.2001 FR 0104998
(43) Date de publication de la demande: 15.09.2004
(73) Titulaire: Hugues, Christian, 94400 Vitry (FR)
(72) Inventeur: Hugues, Christian, 94400 Vitry (FR)
(86) Numéro de dépôt international: PCT/FR2002/001232
(87) Numéro de publication internationale: WO 2002/083497

(56) Documents cités:
- FR-A- 2 294 085
- FR-A- 2 780 700
- US-A- 2 576 981
- US-A- 4 477 042
- US-A- 5 102 068
- US-A- 5 297 764

## Description

Fixé à l'extrémité d'une aile la présente invention concerne un dispositif ayant la forme d'une plume d'oie taillée vers l'extérieur et vers le bord d'attaque dont la hampe représente une cavité cylindrique en spirale et/ou à fente hélicoïdale. L'ensemble permet de réduire la traînée induite, le tourbillon marginal dit vortex et d'augmenter la finesse.

Fixé solidaire à l'extrémité de l'aile ou articulé toujours solidaire de cette extrémité d'aile, il peut s'adapter à tous profils, en particulier aux ailes des avions, des planeurs, aux pales d'hélicoptères et aux extrémités d'hélices tractantes, propulsantes. ou propulsées comme les pales d'éoliennes ou encore pour appareils tels que bateaux ou sous-marins utilisant la portance ou la direction dans leur déplacement trois axes, vertical, horizontal et en lacets.

Aux performances initiales, cette invention permet d'utiliser de plus faibles motorisations, de faire des trajets plus longs et plus vite tout en consommant moins d'énergie ou en produisant plus pour les éoliennes par exemple, d'utiliser des charges plus importantes, d'augmenter et d'aborder le trafic transition/arrivée/départ des aérodromes ou aéroports avec plus de sécurité.

Utilisé à l'envers (intrados/extrados) sur des véhicules terrestres à grande vitesse ou voitures de course, ce dispositif fixé à chaque extrémité d'aile ou d'ailes, donne un résultat inverse, au prorata de sa vitesse. Plus le véhicule va vite moins il provoque de traînées plus il est plaqué au sol.

Tout objet se déplaçant dans l'air provoque une traînée qui est la composante parallèle à la direction de l'écoulement. Le but de seulement réduire cette traînée est le quotidien de tout ingénieur en mécanique des fluides. Un avion sans aucune traînée est une pure utopie. Pour faire voler un avion, il faut adapter une force propulsive ou tractive égale à sa traînée. Il existe plusieurs sortes de traînées sur un avion mais dans ce cas précis nous nous intéresserons à la traînée induite.

Toujours dirigée parallèlement au vent relatif(12). C'est la cause principale des tourbillons de bord de fuite(2): l'air passe sur l'extrados(5) d'une aile tend à s'écouler vers l'intérieur. Il en est ainsi parce que la pression sur l'extrados(5) est plus faible que la pression à l'extérieur des bouts d'ailes. D'autre part, l'air en dessous de l'aile s'écoule vers l'extérieur parce que la pression sur l'intrados(6) est plus grande que celle qui règne à l'extérieur des bouts d'ailes, l'air cherche donc continuellement à contourner l'extrémité des ailes, de l'intrados(6) à l'extrados(5). La façon peut-être d'expliquer pourquoi un allongement élevé est meilleur qu'un allongement faible serait de dire que plus l'allongement est grand, plus la proportion d'air qui s'échappe par les bouts d'ailes est faible et l'air qui contourne les bouts d'ailes n'est plus là pour produire de la portance, c'est ce qu'on appelle parfois "une perte marginale".

Comme les deux écoulements, celui de l'extrados(5) et celui de l'intrados(6), se rencontrent en bord de fuite(2) sous un certain angle, ils forment des tourbillons qui tournent dans le sens horaire, vus de l'arrière, derrière l'aile gauche et dans le sens anti-horaire derrière l'aile droite. Tous les tourbillons d'un même côté tendent à se rejoindre pour former un seul grand tourbillon qui s'échappe de chaque bout d'aile et ces deux grands tourbillons s'appellent les tourbillons marginaux(10) ou plus communément vortex.

La plupart des pilotes ont vu la partie centrale de ceux-ci rendue visible par la condensation de l'humidité de l'air qui est une chute de pression au coeur du tourbillon.

Si l'on considère maintenant le sens de rotation de ces tourbillons, on s'aperçoit qu'il y a un courant d'air vers le haut à l'extérieur de l'envergure des ailes et un courant d'air vers le bas en arrière du bord de fuite. Il ne faut pas confondre ce courant d'air vers le bas avec la déflexion qui se produit normalement. Dans ce dernier cas, la déflexion vers le bas s'accompagne toujours vers le haut en avant de l'aile si bien que la direction finale de l'écoulement n'est pas modifiée.

Mais dans le cas des tourbillons marginaux(10), la déflexion vers le haut se produit à l'extérieur de l'aile et non pas en avant d'elle, si bien que l'écoulement quittant l'aile est en fin de compte dirigé vers le bas et par conséquent, la portance, qui agit perpendiculairement à l'écoulement, est légèrement inclinée vers l'arrière et contribue à la traînée.

Pour une aile rectangulaire, cette partie de la traînée s'appelle la traînée induite et se calcule ainsi: Traînée induite = Cxi(Cz²/πλ=).½ρ V².S (résultat en Newtons) Cxi = Coefficient de traînée induite
Cz = Coefficient de portance,
π = 3,14
λ= allongement (envergure/corde moyenne ou l'envergure au carré/surface),
ρ = masse volumique de l'air,
V = vitesse en mètres par seconde,
S = superficie (surface portante ou maître couple).
et la multiplier par la vitesse de l'avion en mètres seconde, cela donne un résultat en Watts qu'il faut convertir en chevaux nécessaires aux situations d'incidences comme les montées, les descentes ou les vols stabilisés de croisière chargés ou pas.

Inversement proportionnelle au carré de la vitesse alors que le reste de la traînée l'est directement, tous les pilotes connaissent tous les problèmes liés à l'incidence de l'aile, surtout quand il s'agit d'une distance franchissable. Pour cela, ils adaptent un angle d'attaque déterminé c'est à dire une vitesse indiquée déterminée, ceci à n'importe quelle altitude avec une charge minimale ou alors ils transportent plus de charge en augmentant la vitesse indiquée.

Dans le cas d'une aile effilée d'un allongement ( rapport envergure au carré/Surface) de 7 à 8 d'un Airbus A340 ou A 380 par exemple (information technique EADS) et pour avoir les meilleures performances, le minimum de traînée induite et augmenter le nombre de mach critique, l'avion a une emplanture de 17,7m, une extrémité d'aile de 3,97m et un effilement de 0,224 (corde extrémité/corde emplanture) qui lui impliquent un angle de flèche.

Alors qu'une aile normale provoque moins de traînée induite, le compromis prend une autre dimension pour faire voler une aile d'Airbus à des vitesses de ≅900Kms/h à un angle d'attaque déterminé pour une distance franchissable voulue. En effet, même si la structure ét l'aérodynamique ont été étudiés pour çà, l'effilement et la flèche de l'aile augmentent le Cxi (coefficient de traînée induite) de 10 à 20% à l'angle d'attaque de vol en croisière et provoque indubitablement pour ces gros porteurs 33% de traînée induite sur la totalité de la traînée.

Pour diminuer cette traînée, plusieurs brevets ont été déposés dans le monde et beaucoup sont en majorité cylindriques qui à priori ne peuvent apporter de gros gains sur la traînée induite ou le vortex vu la loi sur l'écoulement d'un fluide à vitesse variable dans des tubes de même diamètre. Comme un avion ou autres véhicules ayant des ailes ne se déplacent jamais à la même vitesse cela crée de la turbulence à l'intérieur du tube, provoque des résonances néfastes à son fonctionnement et/ou génère du vortex:
N°FR 405 177 A (G.BARBAUDY) du 9/11/1909,
N°US 2 075 817 A (A.W.LOERKE) du 6/4/1937,
N°FR 57 646 E (P.M.LEMOIGNE) du 20/3/1953,
N°US 3 596 854 A (HANEY WILLIAM R JR) du 3/8/1971,
N°DE 31 27 257 A (VER FLUGTECHNISCHE WERKE) du 27/01/1983.

Il y a aussi d'autres systèmes comme les excroissances verticales d'extrémité d'aile utilisées actuellement sur les avions gros porteurs afin de diminuer la traînée induite ou retarder le vortex, comme les Winglets (petites ailettes) de R.T.WHICOMB (USA 1985), utilisés depuis 15 ans par la majorité des compagnies aériennes donnent des gains enregistrés de 3 à 4% de la traînée totale (gain brut) et environ 1,2% de la traînée induite (gain net) sur un Airbus A340 par exemple.

Il y a les petites ailes superposées en extrémité d'aile de Ulrich LA ROCHE (SUISSE 1995) aux gains très positifs.

Les spiroïdes d'AVIATION PARTNERS (USA 1997)

Les générateurs de vortex de MICRO AERODYNAMICS (USA) placés sur les extrados en retrait des bords d'attaque.

Mis à part ce dernier, les autres, même fabriqués avec de nouveaux matériaux, ne peuvent pas résister à l'impact des oiseaux migrateurs d'un avion à une vitesse d'approche de 150 Kts (1 Kt= 1852 mètres). Cela est prouvé sur les winglets actuellement utilisés sur les gros porteurs.

Pour obtenir de meilleurs résultats avec des concepts différents, on étudie pour le futur d'autres types d'ailes comme la forme en losange ou rhomboïdales qui relie l'aile principale à l'aile du plan horizontal arrière jointe et fixée au dessus du fuselage. C'est un très bon compromis pour réduire la traînée et faire des économies mais dans ce cas, les moteurs fixés aux intrados des ailes ne diminuent pas le bruit très contesté aux abords des aéroports.

Etant donné que le trafic aérien dans le monde est en augmentation de 5% l'an, le compromis le plus viable pour le voisinage est de placer les moteurs sur les extrados des ailes ou au dessus à l'arrière du fuselage, quant au problème de réduction de traînée induite ou vortex à l'extrémité des ailes il reste toujours le même.

A cet effet en 1999, plusieurs campagnes de recherches et d'essais sont faites au laboratoire de la soufflerie Eiffel sur un prototype (brevet français N°98/08472 « cavité cylindrique en spirale ») à fente rectiligne ou hélicoïdale pour confirmer la réduction de cette traînée induite et l'élimination du vortex. Ce prototype, a été fixé à l'extrémité d'une aile à l'échelle 1/1 d'un allongement de 1,30 (rapport d'essais n° Ae-99-127). La même année, ces résultats sont présentés et approuvés par l'ONERA qui suggère de faire des essais avec une nouvelle aile d'un allongement de 8 plus proche des gros porteurs comme le futur Airbus A 380 dont l'allongement est dé 7,5. Ce brevet Français, N° de publication FR 2 780 700 est considéré comme l'art antérieur le plus proche.

Le 2/7/1999 dépôt d'un PCT FR/99/01603 « équilibreur de pression à écoulement contrôlé », une maquette d'aile est fabriquée de 1,32m d'envergure d'un allongement de 8 pour y adapter, à l'échelle 1/7,055, les prototypes aux extrémités des ailes et les passer en soufflerie. Travaux échelonnés sur quatre campagnes d'essais, vingt deux paires de prototypes sensiblement différents ont été essayés. Il en résulte que le Cz est en augmentation sur tous les prototypes équipés d'une languette(28) sans fente hélicoïdale ont un gain de 2,8% à 3,2% sur le n°18, de 3,2% à 3,6% sur le n°19 et 3,6% à 4% sur le n°20, portance qui augmente du même coup la finesse. Quant au vingt deuxième équipé d'une fente hélicoïdale celui-ci détruit le vortex à tous les angles de vol (rapport d'essais n°Ae-00-151).

C'est une raison de dire que cette fente rectiligne(27), citée dans le PCT FR/99/01603, fonctionne sur un faible allongement avec un faible débit d'air de surpression d'intrados et on peut dire aussi que cette fente rectiligne de départ se transforme en fente hélicoïdale et son pas ou angle hélicoïde(29) augmente d'autant plus que la vitesse au vent relatif(16) est grande par rapport à l'allongement et l'effilement/flèche de l'aile et également que' l'entrée en biseau(15) s'oriente vers l'extérieur, donne forme à une languette à partir du bord d'attaque et devient ovoïde vue de profil.

Largement décrite sur le brevet français et le PCT, cette extrémité d'aile cylindrique pourrait être également sensiblement cylindrique pour des raisons de pression et de température appuyant les études dans des conditions normales lorsque la fente est hélicoïdale ou sensiblement hélicoïdale, le pas de l'hélicoïde(29) et l'accélération de la force centripète ou flux induit d'intrados(26) dépendent de la pression par rapport à la vitesse au vent relatif(16) au prorata de l'incidence, poids et maître couple.

Par la vitesse du déplacement de l'aile, cet écoulement d'intrados(11) surpressionnaire se dirige vers l'extrémité de l'aile(25) et vers le haut pour rejoindre l'extrados(10) dépressionnaire et se transformer immédiatement en mouvement centripète et hélicoïdal vers le bord de fuite(2). Donc, si ce mouvement est centripète vers le bord de fuite(2) il passe obligatoirement par la fente hélicoïdale crée à cet effet tout autour du pseudo-cylindre quel qu'en soit l'endroit et sur toute sa profondeur.

Dans le cas des avions par exemple où chaque dispositif est fixé à l'extrémité de chaque aile, deux écoulements se rencontrent en bord de fuite(2) sous un certain angle et forment des tourbillons tournant dans le sens horaire, vus de l'arrière, derrière l'aile gauche et dans le sens anti-horaire derrière l'aile droite, amène à fabriquer chaque dispositif contraire à l'autre avec une technologie de pointe.

L'aide de la conception assistée par ordinateur(CAO) permet d'obtenir sur le champs un prototypage rapide des dispositifs opposés, à l'échelle choisie, de les adapter et les fixer aux extrémités d'aile pour le passage en soufflerie. Cette soufflerie, pour être conforme et s'approcher de la réalité, est équipée d'un compresseur isotherme sensiblement de 25 atmosphères pour déterminer le débit généré par la surpression d'intrados, l'angle et l'épaisseur ou largeur de cette fente hélicoïdale du dispositif et trouver le meilleur Cx et K minimum (K= traînée de forme trouvée après passage en soufflerie) par rapport à sa vitesse maximale en croisière ou des paramètres de vol utilisés, de portance, de traînée et de vortex.

En fonction de la pression exercée à l'entrée ovoïde après la languette, cette fente hélicoïdale(4) d'une épaisseur(x) peut s'enrouler de -180° à +360° à un angle(4) α), donc un- pas, autour et sur toute la profondeur de la cavité cylindrique pour sortir linéaire en bord de fuite(BF).

Nous savons déjà que: plus l'aile est épaisse, par rapport à la profondeur de la corde de profil, plus elle génère de la portance et produit de la résistance. D'autre part, plus l'angle d'attaque augmente, plus l'effet des différences de pression extrados(10)/intrados(11) s'accentue.

C'est pour cette raison qu'il est important de séparer et canaliser le flux induit d'intrados(26) surpressionnaire dès sa création, peu après le bord d'attaque(1), par une languette(18).

Il s'est avéré aux essais que le diamètre(5) de l'extrémité cylindrique à fente hélicoïdale(25) est sensiblement de 10% le même que l'épaisseur maximale de l'extrémité de l'aile(23), ce qui correspond au débit généré et à la définition de l'allongement d'une aile: allongement infini = Traînée induite et vortex nuls.

Génération de la portance par la languette(18): entraîné par le vent relatif(16), le flux induit de surpression d'intrados(26) débutant peu après le bord d'attaque(1) a immédiatement tendance à se diriger vers le haut pour rejoindre l'extrados(10) dépressionnaire et y rencontrer le début de la languette(18). Au fur et à mesure qu'il avance, la languette(18) s'élargit jusqu'à l'entrée cylindrique hélicoïdale, endroit où l'épaisseur du profil est maximale(23), la surpression et la dépression plus grandes créant un maximum de portance et une plus grande activité du tourbillon. Explications:

Vue de profil dispositif fixé à l'extrémité de l'aile: faisant corps, en continuité du cylindre à fente hélicoïdale et de même courbe diamétrale, cette languette(18), sorte de semi-circulaire ovoïde en forme de plume d'oie taillée, épouse l'extrados(10) de l'aile vers et jusqu'au bord d'attaque(1). L'ensemble fixe ou mobile peut se mouvoir parallèle à la corde de profil(6) vers le bord d'attaque(1) ou vers le bord de fuite(2) ou avoir un calage négatif ou positif suivant les paramètres de vol utilisés.

Vue de dessus, dispositif fixé à l'extrémité de l'aile coté extrados(10): naissant à l'extrados du bord d'attaque(1), cette languette(18) s'élargit dans la même courbe que celle du dispositif jusqu'à former une semi-circulaire faisant partie intégrante de l'entrée cylindrique à fente hélicoïdale.

Vue de face du bord d'attaque, dispositif fixé à l'extrémité de l'aile: en premier plan, la languette(18) de même courbe diamétrale débute du bord d'attaque(1) et s'éloigne jusqu'à former une semi-circulaire en second plan qui est l'entrée cylindrique à fente hélicoïdale, entrée ronde et ovoïde vue de profil.

Fixation du dispositif à l'extrémité de l'aile: l'ensemble entrée cylindrique hélicoïdale/languette ne peut être fixé sur un plan vertical puisque cet ensemble est cylindrique. Il est donc nécessaire de rendre rigide et monobloc le vide existant entre le support ayant la même forme que le profil d'extrémité de l'aile et le dispositif que nous appellerons : évidement rigide aérodynamique(28), le tout fabriqué de manière à créer le minimum dé résistance. Cet ensemble peut se mouvoir circulairement sur lui-même vers la gauche ou vers la droite.

Nous savons que les bords d'attaque(1) sur un profil d'aile sont étudiés pour permettre de conserver un écoulement avec un minimum de traînée. La fente hélicoïdale située après l'entrée cylindrique ovoïde crée obligatoirement une traînée de frottement sur toute sa longueur.

Diminution de la traînée: D'une façon générale, moins il y a de surface exposée au vent relatif(16) moins il y a de résistance. Etant donné que K est une traînée d'écoulement d'un fluide sur une forme. Plus cette forme crée de la résistance plus le coefficient K est grand, d'où l'importance du passage en soufflerie quand on rajoute un élément à l'extrémité de l'aile d'origine pour en connaître les gains.

C'est pour cette raison que cette extrémité d'aile cylindrique hélicoïdale(25) doit être parfaitement cylindrique à l'intérieur comme à l'extérieur. Dans cette optique, des bords d'attaque(1) et des bords de fuite (2) sont prévus, fente hélicoïdale comprise, de l'entrée à la sortie et sur toute sa profondeur. L'ensemble comprenant: la languette(18), l'entrée cylindrique ovoïde, le cylindre avec la fente hélicoïdale, les lamelles de jonction de cette fente hélicoïdale, monobloc à l'évidement de jonction rigide aérodynamique(28) et au support en forme du profil, le tout fixé au profil de l'extrémité de l'aile(22) dans un aspect parfaitement aérodynamique.

Destruction du vortex: à une incidence de vol à l'extrémité de l'aile, le vortex, surpression centripète vers l'extrados, se crée sur trois pressions différentes:
1/ Le flux dépressionnaire qui est un courant d'air vers le bas en arrière du bord de fuite provoqué par l'accélération due à la courbure de l'extrados(10) au vent relatif(16).
2/ Le flux surpressionnaire qui est un courant d'air vers le haut à l'extérieur de l'envergure de l'aile de l'intrados(11) au vent relatif(16) vers l'extrados(10).
3/ Le flux linéaire qui n'est pas réellement un flux mais une pression locale du vent relatif(16) (l'avion avance dans l'air).
Inéluctablement, ces différences de pression provoquent, peu après le bord d'attaque(1) et venant de l'intrados(11), un mouvement ou flux hélicoïdal(26) sur toute la profondeur de l'extrémité de l'aile vers le bord de fuite.

Par sa vitesse au vent relatif(16), le flux induit d'intrados(26) devenant centripète par sa surpression s'enroule en hélicoïde(29) autour de cette forme cylindrique, pénètre à l'intérieur là où la fente hélicoïdale passe et se retrouve en pression plus faible (pression locale du vent relatif) sur tout son parcours jusqu'à la sortie.

Le flux d'extrados perdant sa dépression(12) en bord de fuite(2) de l'aile tend à se diriger vers le bas entraîné par le mouvement du flux d'intrados(26) centripète. A cet effet, le bord de fuite(2) de l'extrémité d'aile positionné au milieu de l'épaisseur de la fente hélicoïdale(4) passant à cet endroit va recevoir le flux d'extrados(10) entraîné par le flux d'intrados(26) centripète vers l'intérieur du cylindre à fente hélicoïdale(25), là, le vent relatif(16) entraîne le tout vers la sortie. Comme tout échappement rond donne un allongement infini sans perte marginale, le vortex en sortie est nul.

Au réglage, afin d'obtenir le meilleur résultat possible suivant les profils utilisés, le bord de fuite(2) d'extrémité d'aile peut être sensiblement positionné en avant ou arrière à partir du milieu de l'épaisseur de la fente hélicoïdale(4).

Actuellement s'il est permis de retarder ce vortex par un prolongement d'aile vertical comme le winglet, on n'a jamais su le dissoudre ou l'annuler. C'est un mouvement très puissant généré par de grandes différences de pressions. En effet, l'incidence ou angle d'attaque de l'aile augmente le Cz, la traînée induite et le vortex en extrémité d'aile. Plus l'incidence de l'aile augmente plus l'angle d'évacuation vers l'extrémité de l'aile sera grand et plus le vortex va s'intensifier : Cxi(Cz²/πλ).½ρ V².S. dont M.V²/r (r étant le rayon du dispositif, M la masse volumique), et son angle hélicoïdal(3) face au vent relatif(16).

Si on rajoute maintenant la résistance du dispositif (vitesse du vent relatif(16) sur la forme de la surface mouillée qui est la surface totale en contact avec l'air): KρSV², sa forme laissant libre cours à cette force dans son mouvement, là où elle est obligée d'aller par son entraînement, va être piégée sur tout le parcours dé la fente l'hélicoïdale et va s'autodétruire et, du même coup, augmenter le rapport Cz/cx, c'est à dire la finesse.

Selon l'invention, ce dispositif d'extrémité d'aile cylindrique à fente hélicoïdale (25) est positionné parallèle ou sur la corde de profil en partant du bord d'attaque(1) début de la languette(18) jusqu'à l'entrée cylindrique hélicoïdale (sensiblement l'endroit de l'épaisseur maximale de l'aile (23)) et peut dépasser le bord de fuite(2) jusqu'à 1/3 de la profondeur de la corde d'extrémité d'aile.

Selon l'invention, le dispositif d'extrémité d'aile cylindrique à fente hélicoïdale (25) est fixé solidaire en bout d'aile. Fabriqué avec un matériau à la fois extrêmement dense et léger, en l'occurrence un alliage aluminium, du titane ou des composites avec de la fibre de verre, de l'aramide(kevlar), du carbone, un mixage de ces derniers ou encore des matériaux futurs plus résistants.

Selon l'invention, ce dispositif d'extrémité d'aile cylindrique à fente hélicoïdale (25) peut être mobile verticalement parallèle à la corde de profil ou pas, selon les incidences utilisées aux paramètres de vol désirés ou futurs adaptés à l'avion.

Selon l'invention, fixe ou mobile, exposé en vol aux différentes pressions le dispositif d'extrémité d'aile cylindrique à fente hélicoïdale (25) est prédestiné au givrage dans les basses couches par forte humidité du au rapprochement température/point de rosée. **Caractérisé en ce que** le dispositif, afin de neutraliser le givre et la glace dans toute son épaisseur et sa profondeur, est muni soit d'une résistance électrique, soit d'une canalisation d'air ou de liquide chaud, soit de canalisations avec échappements de glycol, ou d'autres systèmes et produits qui seraient utilisés dans le futur. En résumé, l'invention consiste :
Premièrement, en un dispositif d'extrémité d'aile tel que revendiqué dans la revendication 1.
Deuxièmement, le dispositif peut être solidaire de l'aile calé initialement ou articulé commandé verticalement parallèle à la corde de profil(6) pour un calage négatif ou positif sur l'axe du foyer ou/et se mouvoir circulairement sur lui-même vers la gauche ou vers la droite ou encore se mouvoir en avant ou en arrière le long de la corde de profil, tout aussi solidaire de l'aile selon les paramètres utilisés.
Troisièmement, le dispositif utilisé à l'envers (intrados(11)/extrados(10) sur des véhicules terrestres à grande vitesse ou voitures de course, fixé à chaque extrémité d'aile ou d'ailes il donne un résultat inverse au prorata de sa vitesse, plus le véhicule va vite moins il provoque de traînées plus il est plaqué au sol.
Quatrièmement, la conformation du dispositif est adaptée aux débits et vitesse de flux ainsi qu'aux surfaces alaires ou d'allongement de l'aile considérée.
Cinquièmement, les caractéristiques mécaniques du dispositif sont déterminées pour être sans déformation à toutes les vitesses de flux et les matériaux utilisés doivent répondre aux critères de légèreté tel qu'alliage aluminium ou titane sur les engins volants.
Sixièmement, la fente sensiblement hélicoïdale(19) du dispositif est munie sur tout son parcours de lamelles de jonction(15) pouvant être profilées et sensiblement parallèles à l'axe cylindrique et leur nombre est déterminé en fonction des efforts exercés aux endroits les plus sollicités de la structure de l'ensemble(21).
Septièmement, le dispositif peut être muni de système de dégivrage par résistance électrique par exemple ou par projection de flux chauds ou encore par dégivreur liquide.
Huitièmement, la fente sensiblement hélicoïdale du dispositif peut être et en cas de besoin, subdivisée en plusieurs fentes.

### Nomenclature des dessins et figures :

1 - BA (bord d'attaque)
2 - BF (Bord de fuite)
3 - α (angle de l'hélicoïde par rapport à l'axe N°9)
4 - E (écartement ou épaisseur de la fente hélicoïdale)
5 - D (diamètre du N°25)
6 - Corde de profil
7 - Profondeur de l'exemple court (hélicoïde α à 140° de l'axe)
8 - Profondeur de l'exemple long (hélicoïde α à 140° de l'axe)
9 - Axe (en transparence du N°25)
10 - Extrados
11 - Intrados
12 - Dépression
13 - Surpression
14 - Tourbillon marginal ou vortex
15 - Biseau ovoïde (languette et retour sur l'intrados)
16 - Vent relatif
17 - Lamelles de jonction
18 - Languette de forme cylindrique
19 - Echappement linéaire
20 - Ensemble (N°25 et N°22)
21 - Aile
22 - Profil de l'extrémité de l'aile
23 - Epaisseur maximale du profil à l'extrémité de l'aile
24 - Fixation du dispositif à l'extrémité de l'aile
25 - Extrémité d'aile cylindrique à fente hélicoïdale
26 - Flux induit d'intrados
27 - Pénétration centripète dans la fente hélicoïdale
28 - Evidement de jonction rigide aérodynamique
29 - Hélicoïde

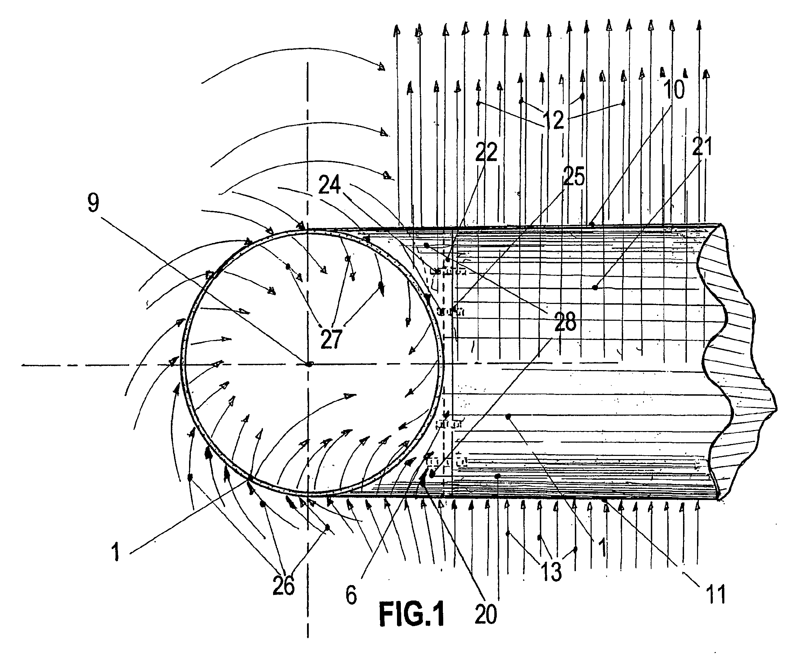

Figure 1 : vue de face, du bord d'attaque de l'extrémité d'aile cylindrique hélicoïdale et de l'ensemble.

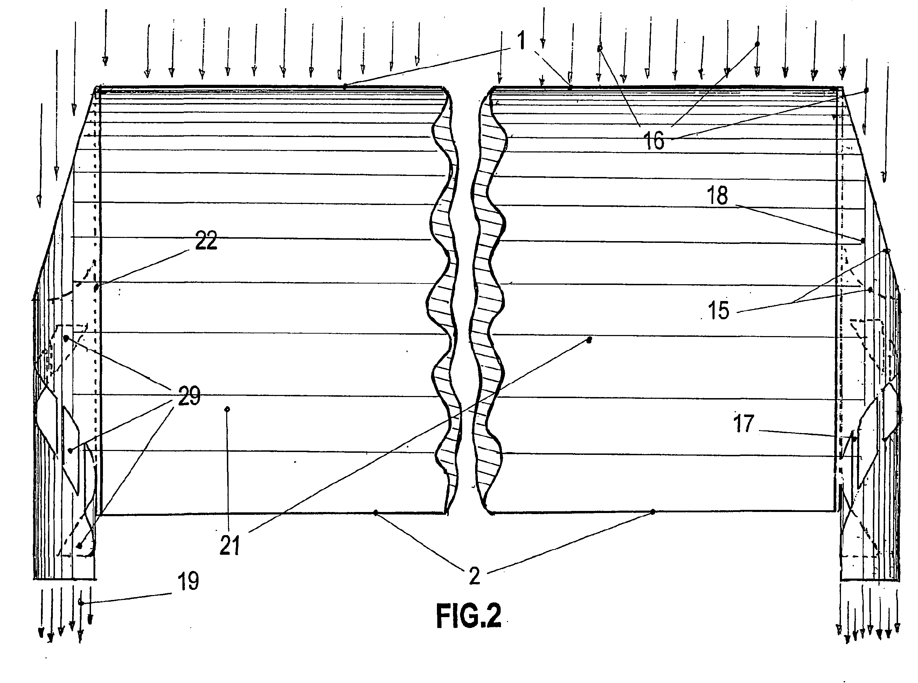

Figure 2 : vue de dessus de l'extrémité d'aile cylindrique à profondeur hélicoïdale courte et de l'aile.

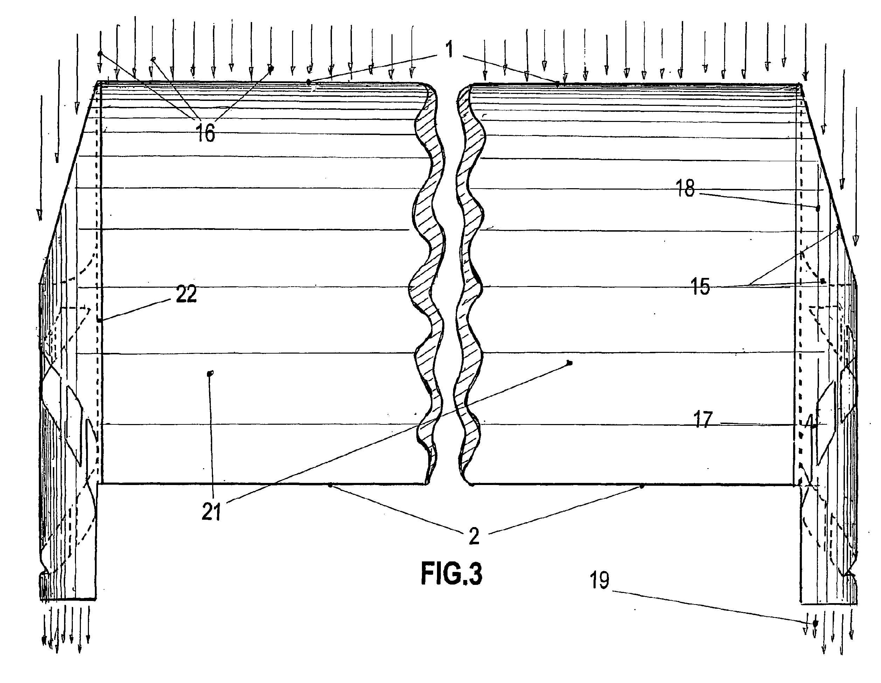

Figure 3 : vue de dessus de l'extrémité d'aile cylindrique à profondeur hélicoïdale longue et de l'aile

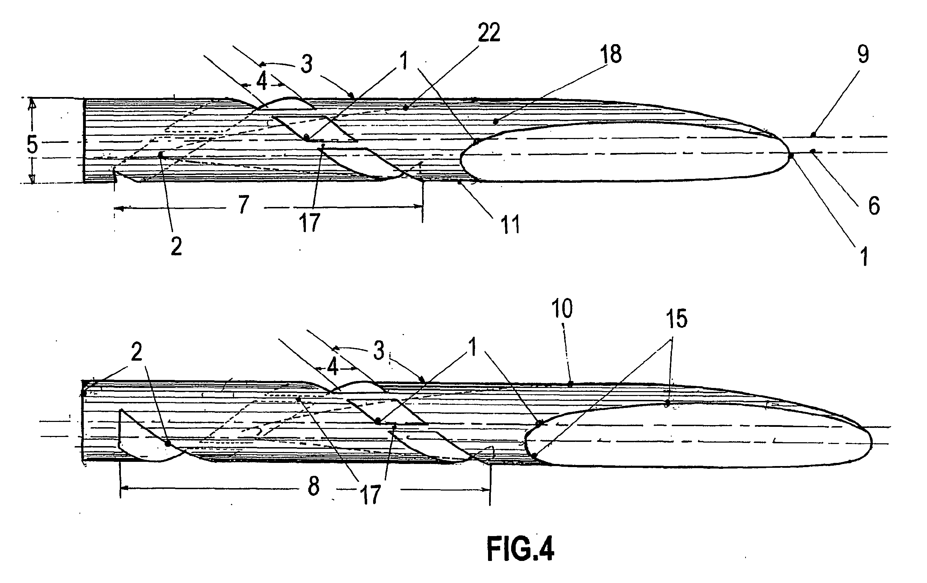

Figure 4 : vue du profil droit de l'extrémité d'aile cylindrique hélicoïdale à profondeur hélicoïdale courte et longue.

## Revendications

1. Dispositif d'extrémité d'aile pouvant être disposé solidairement ou articulé sur la dite extrémité et ayant pour objet d'augmenter la portance, de réduire la traînée induite et le tourbillon marginal dit vortex pour augmenter la finesse, ayant :
a) l'aspect d'une plume d'oie ou d'une languette(18) taillée en biseau ovoïde(15) du côté opposé à la fixation du dispositif(24) et vers le bord d'attaque(1) dont la hampe ou le corps représente :
- une cavité cylindrique à fente hélicoïdale, ou
- une cavité cylindrique, ou sensiblement cylindrique,
sensiblement en spirale, à fente hélicoïdale ou sensiblement hélicoïdale ; et
b)la pointe de la dite lanquette(18) toujours, ou sensiblement toujours dans le même diamètre(5) et
lorsque disposé ou articulé sur la dite extrémité, le dit dispositif débute du bord d'attaque(1) sur l'extrados(10) et s'élargit jusqu'à former une forme sensiblement semi-cylindrique jusqu'à l'entrée sensiblement cylindrique qui se trouve sensiblement à l'emplacement de l'épaisseur maximale de l'aile(23) où commence une partie de surface d'enveloppe semblant enroulée hélicoïdalemant(29) sur sensiblement 180° à 360°;
laissant apparaître, la fente sensiblement hélicoïdale autour d'un axe(9) disposé sensiblement le long et parallèlement à la corde du profil(6) de l'extrémité d'aile et cette fente sensiblement hélicoïdale a un angle(3) d'enroulement et une épaisseur(4) qui peuvent être sensiblement adaptés au profil ainsi qu'à l'allongement, à l'effilement, à la flèche, à la vitesse et à l'incidence dans le milieu considéré qu'il soit gazeux ou liquide où l'aile se déplace, et
sur le parcours du flux selon cette fente sensiblement hélicoïdale, le bord de fuite(2) d'extrémité d'aile passe sensiblement au milieu de l'épaisseur(4) de cette dite fente hélicoïdale toujours en continuité de telle sorte que la profondeur du dit dispositif dépasse le bord de fuite de l'extrémité de l'aile jusqu'à environ tiers de la profondeur de la corde pour se terminer en forme sensiblement annulaire et
le dit dispositif permet d'augmenter ainsi la finesse en diminuant la résistance de l'effet vortex provoqué par le vent relatif(16) pénétrant de face et du flux latéral induit(26) provenant de la suppression(13) de l'intrados(11), de les canaliser et les confondre en un couloir cylindrique jusqu'à l'éjection ;
le dit dispositif pouvant s'appliquer aux avions, planeurs, pales de toutes sortes, hélices tractantes propulsantes ou propulsées comme les pales d'éoliennes, ainsi qu'aux équipements subaquatiques des bateaux ou sous-marins utilisant ces trois axes dans leur déplacement, permettant ainsi d'utiliser de plus faibles motorisations, de faire des trajets plus longs et plus rapides tout en consommant moins d'énergie ou bien en produisant plus dans le cas d'éoliennes et de même d'utiliser des charges plus importantes ainsi que d'augmenter et aborder le trafic transition/arrivée/départ des aérodromes ou aéroports avec plus de sécurité.

2. Dispositif d'extrémité d'aile selon la revendication n°1 **caractérisé en ce que** le dispositif peut être solidaire de l'aile calé initialement ou articulé commandé verticalement parallèle à la corde de profil(6) pour un calage négatif ou positif sur l'axe du foyer ou/et se mouvoir circulairement sur lui-même vers la gauche ou vers la droite ou encore se mouvoir en avant ou en arrière le long de la corde de profil, tout aussi solidaire de l'aile selon les paramètres utilisés.

3. Dispositif d'extrémité d'aile selon la revendication n°1 **caractérisé en ce que** utilisé à l'envers (intrados(11)/extrados(10) sur des véhicules terrestres à grande vitesse ou voitures de course, le dispositif fixé à chaque extrémité d'aile ou d'ailes donne un résultat inverse au prorata de sa vitesse, plus le véhicule va vite moins il provoque de traînées plus il est plaqué au sol.

4. Dispositif d'extrémité d'aile selon l'une des revendications 1 à 3 **caractérisé en ce que** la conformation est adaptée aux débits et vitesse de flux ainsi qu'aux surfaces alaires ou d'allongement de l'aile considérée.

5. Dispositif d'extrémité d'aile selon la revendication 1 à 4 **caractérisé en ce que** ses caractéristiques mécaniques sont déterminées pour être sans déformation à toutes les vitesses de flux et les matériaux utilisés doivent répondre aux critères de légèreté tel qu'alliage aluminium ou titane sur les engins volants..

6. Dispositif d'extrémité d'aile selon l'une de ces revendications 1 à 5 **caractérisé en ce que** la fente sensiblement hélicoïdale(19) est munie sur tout son parcours de lamelles de jonction(15) pouvant être profilées et sensiblement parallèles à l'axe cylindrique et leur nombre est déterminé en fonction des efforts exercés aux endroits les plus sollicités de la structure de l'ensemble(21).

7. Dispositif d'extrémité d'aile selon l'une des revendications 1 à 6 **caractérisé en ce qu'**il peut être muni de système de dégivrage par résistance électrique par exemple ou par projection de flux chauds ou encore par dégivreur liquide.

8. Dispositif d'extrémité d'aile selon l'une des revendications 1 à 7 **caractérisé en ce que** la fente sensiblement hélicoïdale peut être et en cas de besoin, subdivisée en plusieurs fentes.

## Claims

1. Wing tip device integrated with or articulated on said wingtip, the object of which is to increase lift, reduce induced drag and marginal swirl (vortex) to increase lift/drag ratio, **characterized by** the fact it resembles a goose feather or small tongue (18) with an ovoid bevel cut (15) on the opposite side to the device attachment (24) and towards leading edge (1), the body of which represents a cylindrical or largely cylindrical cavity, largely spiral in form and/or largely spiral with a helicoidal or largely helicoidal slot, with the tip of said small tongue (18) always or nearly always having the same diameter (5), said device commencing at leading edge (1) on upper surface (10), then broadening to form a largely semicylindrical shape up to the largely cylindrical inlet approximately at the point of maximum wing thickness (23), at the commencement of an envelope surface part in seemingly helicoidal form (29) between approximately 180° and 360° ; showing, on a largely helicoidal slot round axis (9) arranged largely along and parallel to wingtip airfoil chord (6), this largely helicoidal slot at helix angle (3) and with thickness (4) that can be largely adapted to the airfoil and wing aspect-ratio, wing taper, wing sweep, speed and angle of attack in the medium considered, whether gaseous or liquid, in which the wing moves, and on the flow path along this largely helicoidal slot, the trailing edge (2) of the wingtip runs largely at the midpoint of thickness (4) of said largely helicoidal slot, in continuity, so that the depth of said device extends beyond trailing edge (2) of the wingtip to about one third of the depth of the chord and terminating in a largely annular form, said device making it possible to thus increase lift/drag ratio by decreasing resistance to the vortex effect induced by relative wind (16) penetrating frontally, and lateral induced flow (26) from overpressure (13) on undersurface (11), to direct and merge the flows in a cylindrical duct to the point of ejection ; said device being applicable to airplanes, gliders, all types of blade, tractor and pusher propellers, wind-powered generator blades, also underwater devices for surface vessels or submarines using the three axes for their displacement, thus providing for the use of lower power drive systems, longer distance travel at higher speeds and with reduced energy consumption, or increased energy production in the case of wind-powered generators, and even transport of heavier loads and increased safety for transit, incoming and outgoing airport traffic.

2. Wingtip device according to claim 1, **characterized by** the fact that the device can be integral with the wing, initially set or articulated, controlled vertically parallel with airfoil chord (6) for a negative or positive setting on the axis of the wing aerodynamic center and/or rotating on its axis to left or right or moving forwards or backwards along the airfoil chord, still integral with the wing according to flight data.

3. Wingtip device according to claim 1, **characterized by** the fact that, used in a reverse configuration (undersurface (11)/upper surface (10)) on high speed land vehicles or racing cars, secured to the wingtip of each wing providing a result inversely proportional to speed, the faster the vehicle travels the less drag it induces and the greater its ground adhesion.

4. Wingtip device according to claims 1 to 3, **characterized by** the fact that the configuration is adapted to flow rate and speed, and the wing surfaces or aspect-ratio of the wing concerned.

5. Wingtip device according to claims 1 to 4, **characterized by** the fact its mechanical characteristics are determined so as to be free from strain at all flow velocities. The materials used, such as aluminium alloy or titanium for aircraft etc., must meet low mass criteria.

6. Wingtip device according to claims 1 to 5, **characterized by** the fact that the largely helicoidal slot is equipped over its full length with junction slats (15) that can be profiled and run largely parallel to the cylindrical axis, their number being determined according to the stresses applied at the most heavily loaded points of the structure (21).

7. Wingtip device according to claims 1 to 6, **characterized by** the fact that it can be equipped with a de-icing system incorporating an electric heater element, or involving the projection of hot flows or using de-icing liquids.

8. Wingtip device according to claims 1 to 7, **characterized by** the fact that the largely helicoidal slot can be subdivided into a number of slots where necessary.

## Patentansprüche

1. Flügelendstück, das mit besagtem Flügelende formschlüssig starr oder gelenkartig verbunden sein kann und das zum Gegenstand hat, den Auftrieb zu erhöhen, den induzierten Widerstand und die als Wirbelschleppe bezeichneten Randwirbel zur Erhöhung der Gleitzahl zu senken,
a) das an der der Endstückbefestigung(24) gegenüber liegenden Seite und hin zur Vorderkante(1) das Aussehen eines Gänsekeils oder einer oval abgeschrägten(15) Feder(18) aufweist, dessen Schaft bzw. Körper:
- eine zylinderförmige Höhlung mit spiralförmiger Schlitzung bzw.
- eine quasi schneckenförmige, zylinderförmige oder quasi zylinderförmige Höhlung mit spiralförmiger oder quasi spiralförmiger Schlitzung aufweist; und
b) bei dem die Spitze der besagten Feder(18) immer bzw. quasi immer den gleichen Durchmesser(5) aufweist und
das, wenn besagtes Endstück formschlüssig starr oder gelenkartig mit besagtem Flügelende verbunden ist, an der Vorderkante(1) auf der Flügeloberseite(10) ansetzt und bis zur Ausbildung einer quasi halbzylinderförmigen Form bis zum quasi zylinderförmigen Eingang, der sich quasi an der Stelle der maximalen Flügeldicke(23) befindet, an der ein Teilbereich der Hüllfläche beginnt, die über quasi 180° bis 360° spiralförmig(29) gewunden zu sein scheint, immer breiter wird;
wobei, entlang einer Achse(9), die quasi entlang und parallel zur Profilsehne(6) des Flügelendes verläuft, eine quasi spiralförmige Schlitzung sichtbar wird, und diese quasi spiralförmige Schlitzung einen Umschlingungswinkel(3) und eine Dicke(4) aufweist, die dem Profil sowie der Streckung, der Zuspitzung, der Pfeilung, der Geschwindigkeit und dem Anstellwinkel im jeweiligen gasförmigen oder flüssigen Milieu, in dem sich der Flügel bewegt, quasi angepasst werden können,
und
auf der Strömungsstrecke gemäß dieser quasi spiralförmigen Schlitzung verläuft die Hinterkante(2) des Flügelendes immer kontinuierlich quasi durch die Mitte der Dicke(4) besagter spiralförmigen Schlitzung, so dass die Tiefe des besagten Endstücks bis um etwa ein Drittel der Sehnentiefe über die Hinterkante des Flügelendes herausragt, um letztlich eine quasi ringförmige Form anzunehmen und
besagtes Endstück macht es **dadurch** möglich, die Gleitzahl durch Senkung des Widerstands infolge des Wirbelschleppeneffekts, der durch den von vorne kommenden relativen Wind(16) und die induzierte seitliche Strömung(26) infolge des Überdrucks(13) an der Flügelunterseite(11) erzeugt wird, zu erhöhen, diese zu kanalisieren und in einem zylinderförmigen Kanal bis zum Ausstoß zusammenzuführen; wobei besagtes Endstück an Flugzeuge, Segelflugzeuge, an Flügel aller Art, an Hub- bzw. Antriebspropeller ebenso wie an angetriebene Rotoren wie beispielsweise die Flügel einer Windkraftanlage sowie an Unterwasserausrüstungen von Booten oder U-Booten, die sich zu ihrer Fortbewegung dieser drei Achsen bedienen, angepasst werden kann, wodurch bei gleichzeitig niedrigerem Energieverbrauch bzw. im Falle von Windkraftanlagen höherer Energieerzeugung weniger starke Motorisierungen benötigt werden und längere Strecken in kürzerer Zeit zurückgelegt werden können und ebenso höhere Auslastungen bewältigt und der Flugverkehr Transit/Ankunft/Abflug an Flugplätzen und Flughäfen sicherer abgewickelt werden kann.

2. Flügelendstück nach Anspruch 1 **dadurch gekennzeichnet, dass** das Endstück formschlüssig starr mit dem Flügel verbunden oder gelenkartig senkrecht parallel zur Profilsehne(6) für einen negativen oder positiven Einstellwinkel auf der Kernachse gesteuert werden kann oder/und sich kreisförmig um sich selbst nach links oder nach rechts bewegen kann oder sich auch entlang der Profilsehne unter Beibehaltung der formschlüssigen Verbindung mit dem Flügel in Abhängigkeit von den verwendeten Parametern nach vorne oder nach hinten bewegen kann.

3. Flügelendstück nach Anspruch 1 **dadurch gekennzeichnet, dass** das bei umgekehrter Verwendung (Flügelunterseite(11)/Flügeloberseite(10) auf schnell fahrenden Landfahrzeugen oder Rennwagen an beiden Enden des oder der Flügel befestigte Flügelendstück proportional zur Geschwindigkeit entsprechend umgekehrt funktioniert, je schneller das Fahrzeug fährt, desto weniger werden Widerstände erzeugt, desto mehr wird das Fahrzeug auf die Piste gedrückt.

4. Flügelendstück nach einem der Ansprüche 1 bis 3 **dadurch gekennzeichnet, dass** die Formgebung den Strömungsdurchsätzen und der Strömungsgeschwindigkeit sowie den Flügelflächen bzw. der Streckung des jeweiligen Flügels angepasst ist.

5. Flügelendstück nach Anspruch 1 bis 4 **dadurch gekennzeichnet, dass** die mechanischen Eigenschaften des Endstücks so ausgelegt sind, dass unabhängig von der Strömungsgeschwindigkeit keine Verformung auftritt und bei Flugapparaten müssen die verwendeten Materialien den Kriterien der Leichtheit gerecht werden, wie etwa Aluminium- oder Titanlegierungen.

6. Flügelendstück nach einem der Ansprüche 1 bis 5 **dadurch gekennzeichnet, dass** die quasi spiralförmige Schlitzung(19) über den gesamten Verlauf mit Verbindungsstreben(15) versehen ist, die profiliert und quasi parallel zur zylinderförmigen Achse sein können, wobei ihre Anzahl von den Kräften abhängig ist, die auf die am stärksten beanspruchten Stellen der Struktur des Ganzen(21) einwirken.

7. Flügelendstück nach einem der Ansprüche 1 bis 6 **dadurch gekennzeichnet, dass** das Endstück mit einer Vereisungsschutzanlage beispielsweise in Form eines elektrischen Widerstands oder durch Versprühen warmer Fließmittel oder auch mittels eines flüssigen Entfrosters versehen werden kann.

8. Flügelendstück nach einem der Ansprüche 1 bis 7 **dadurch gekennzeichnet, dass** die quasi spiralförmige Schlitzung auch, und bei Bedarf, in mehrere Schlitze unterteilt werden kann.
